# EUROPÄISCHE PATENTANMELDUNG

(11) **EP 0 640 512 A1**
(43) Veröffentlichungstag der Anmeldung: **01.03.1995**
(21) Anmeldenummer: 94202016.5
(22) Anmeldetag: 12.07.1994
(51) Int. Cl.: B60R 21/02

(54) **Sicherheitseinrichtung für die Fahrgastzelle einer Kraftfahrzeugkarosserie**

(30) Priorität: 24.08.1993 DE 4328446
(71) Anmelder: PARS Passive Rückhaltesysteme GmbH, 63755 Alzenau (DE)
(72) Erfinder: Hoffmann, Rainer, D-63755 Alzenau (DE); Bischoff, Michael, D-67791 Karlstein (DE); Franz, Dr. Joachim, D-63857 Waldaschaft (DE); Thein, Thomas, D-97526 Sennfeld (DE)
(74) Vertreter: Rieger, Harald, Dr.

(57) **Zusammenfassung**

Eine Sicherheitseinrichtung für die Fahrgastzelle eines Personenkraftwagens besteht aus einer in Kniehöhe in der Frontpartie des Fahrzeugs angebrachten, mittels eines Antriebs in Richtung zu den Knien des Fahrgasts verschiebbaren Polsterplatte (4). Eine einfache Ausführungsform des Antriebs besteht aus einer eingespannten, im Ruhezustand vorgespannten, gegen die Fahrtrichtung des Fahrzeugs auslösbaren Blattfeder (11).

## Beschreibung

Die Erfindung betrifft eine Sicherheitseinrichtung für die Fahrgastzelle einer Kraftfahrzeug-Karosserie, vorzugsweise Personenkraftwagen-Karosserie, bestehend aus einer in Kniehöhe vor dem auf einem Fahrzeugsitz, vorzugsweise Beifahrersitz, sitzenden Fahrgast in der Frontpartie der Fahrgastzelle integrierten, an einer Führung befestigten Polsterplatte, die bei einem Aufprallstoß mittels eines Antriebs in Richtung zu den Knien des Fahrgasts hin bewegbar ist.

Zur Erhöhung des Sicherheitsstandards passiver Rückhaltesysteme für die Fahrgastzelle insbesondere von Personenkraftwagen-Karosserien, die dafür sorgen, daß der Fahrgast möglichst bald nach einem Aufprallstoß an der Verzögerung des Fahrzeugs teilnimmt und nicht im Stoßablauf gegen die Fahrgastzelle geschleudert wird, ist vorgesehen, aus plastisch deformierbarem Werkstoff bestehende Kniepolster in der Frontpartie der Fahrgastzelle anzuordnen. Ein solches Kniepolster soll die Verlagerung der unteren Extremitäten und des Beckens insbesondere eines nicht durch einen Dreipunkt-Sicherheitsgurt zurückgehaltenen Fahrgasts im Falle des Aufprallstoßes verhindern, indem es in Richtung zu den Knien des Fahrgasts hin bewegt wird und in 20 bis 35 ms nach dem erfolgten Aufprallstoß in den Nahbereich der Knie gelangt. In Verbindung mit einem gleichzeitig in die Fahrgastzelle austretenden Gassack einer in der Frontpartie des Kraftfahrzeugs untergebrachten Gassack-Aufprall-Schutzeinheit ergibt sich neben einem reduzierten Verletzungsrisiko für Kopf, Halswirbel, Brust und innere Organe auch ein solches für die unteren Extremitäten des Fahrgasts.

Aus der DE-A-4 201 824 und der DE-A-2 634 222 sind Rückhaltesysteme für die unteren Extremitäten von auf einem vorderen Fahrzeugsitz sitzenden Fahrgasts bekannt, die im Falle eines Aufprallstoßes des Kraftfahrzeugs ein um eine horizontale Achse bewegbares Aufprallelement vor die Knie des Fahrgasts schwenken. In den DE-A-3 908 713, DE-C-4 007 524 und EP-B-0 061 828 ist im unteren Teil der Frontpartie des Kraftfahrzeugs eine Gassack-Aufprall-Schutzvorrichtung vorgesehen, die dafür sorgt, daß im Falle eines Aufprallstoßes der sich aufblasende Gassack zwischen die Frontpartie und die Knie des Fahrgasts schiebt, um so zu verhindern, daß sich die unteren Extremitäten des Fahrgasts gegen die Aufprallstoßrichtung verschieben können.

In den DE-A-4 002 448, DE-C-4 021 145 und EP-A-0 421 572 sind Rückhaltesysteme für die unteren Extremitäten des Fahrgasts beschrieben, die aus einem in der Frontpartie des Fahrzeugs in Höhe der Knie des Fahrgastes integrierten Kniepolster bestehen, das bei einem Aufprallstoß aus der Ruheposition mittels eines Servoantriebs und einer Führung in möglichst kurzer Zeit nach dem Aufprallstoß in eine knienahe Position verschiebbar ist, um zu erreichen, daß der Fahrgast möglichst früh an dem Verzögerungsverlauf des Fahrzeugs teilnimmt. An den Einsatz solcher Rückhaltesysteme ist insbesondere im Zusammenwirken mit einer im Bereich der Frontpartie des Kraftfahrzeugs eingebauten Gassack-Aufprall-Schutzeinheit gedacht, deren Gassack sich nach dem Aufprallstoß zwischen den Fahrgast und die Frontpartie legt.

Aufgabe der vorliegenden Erfindung ist es, die eingangs beschriebene Sicherheitseinrichtung so zu gestalten, daß mit vergleichsweise einfachen Bauteilen die Polsterplatte frühzeitig in eine knienahe Position bewegbar ist, damit nur ein möglichst kurzer Weg für die Vorverlagerung der unteren Extremitäten des Fahrgasts zur Verfügung steht.

Gelöst ist diese Aufgabe dadurch, daß der Antrieb für die Polsterplatte aus einer fahrzeugfest eingespannten, im Ruhezustand vorgespannten, gegen die Fahrtrichtung des Fahrzeugs auslösbaren, mit der Polsterplatte verbundenen Blattfeder besteht. Bei einem Aufprallstoß des Fahrzeugs wird die Vorspannung der Blattfeder gelöst und die Polsterplatte in Richtung zu den Knien des Fahrgasts hin verschoben. Die unteren Extremitäten des Fahrgasts nehmen dann vergleichsweise sehr früh an dem Verzögerungsablauf des Fahrzeugs teil, was insgesamt zu niedrigeren Belastungen führt und damit die Verletzungsgefahr der unteren Extremitäten erheblich reduziert.

Die aus Federstahl oder mit Glasfasern oder Kohlestoffasern verstärktem Kunststoff bestehende Blattfeder ist im vorgespannten Ruhezustand gerade, elliptisch oder parabelförmig geformt.

In Abhängigkeit von der für das Ausstoßen der Polsterplatte notwendigen Federkraft ist die Blattfeder einfach oder geschichtet, vorzugsweise mit reibungsarmen Einlagen zwischen den einzelnen Schichten, ausgebildet.

Im Rahmen der vorzugsweisen Ausgestaltung der Sicherheitseinrichtung ist die im Ruhezustand vorgespannte Blattfeder beidseitig eingespannt und mittels einer in ihrem hochbeanspruchten Bereich befestigten Schubstange mit der Polsterkappe verbunden.

Es besteht auch die Möglichkeit, die vorgespannte Blattfeder nur mittig einzuspannen und die an ihren Endabschnitten jeweils angeschlagene Führung der Polsterplatte als Schubstange für das Verschieben der Polsterplatte zu benutzen.

Die vorgespannte Blattfeder kann auch nur einseitig eingespannt sein, wobei die an dem freien Endabschnitt angeschlagene Führung der Polsterplatte als Schubstange für das Verschieben der Polsterplatte dient.

Die Blattfeder ist sowohl in horizontaler als auch in vertikaler Richtung einbaubar, so daß eine Anpassung an die Raumverhältnisse hinter der Frontpartie des Fahrzeugs möglich ist.

Um die vorgespannte Blattfeder im Ruhezustand zu halten, ist diese über eine Trennschraube mit einer fahrzeugfesten Haltevorrichtung verspannt. Der Zünder für den Festtreibstoffsatz der Trennschraube ist mit einem herkömmlichen, im Kraftfahrzeug angebrachten Aufprallstoß-Sensor verbunden, so daß in etwa 10 bis 12 ms nach erfolgtem Aufprallstoß durch die Zerstörung der Trennschraube die Verbindung zwischen der fahrzeugfesten Halteeinrichtung und der vorgespannten Blattfeder zerstört wird und die Blattfeder die Polsterplatte innerhalb weiterer 10 bis 12 ms vor die Knie des Fahrgasts schiebt.

Anstelle einer Trennschraube kann auch ein die in Ruheposition vorgespannte Blattfeder haltender Elektromagnet eingesetzt werden, der bei einem Aufprallstoß durch Anlegen eines durch den Aufprallstoß-Sensor ausgelösten elektrischen Stroms die Blattfeder freigibt, so daß sich diese in Richtung zu den Knien des Fahrgasts bewegt.

Als Blattfedern eignen sich Rechteck-, Dreieck-, Trapez- oder Halbelliptikfedern.

Um ein Durchschwingen der Blattfeder nach dem Auslösen der Vorspannung zu vermeiden, ist diese über eine Steckverbindung mit der Schubstange bzw. Führung verbunden.

Die Führung der Polsterplatte ist horizontal oder schräg von unten vorn nach oben hinten verschiebbar gelagert.

Im Rahmen einer besonderen Ausbildung der Sicherheitseinrichtung ist auf der Führung der Polsterplatte ein Stoppring angebracht, durch den das Verschieben der Polsterkappe gegen die Fahrtrichtung bei Erreichen der knienahen Position abgebremst wird.

Die Erfindung ist in der Zeichnung näher und beispielhaft erläutert. Es zeigen:

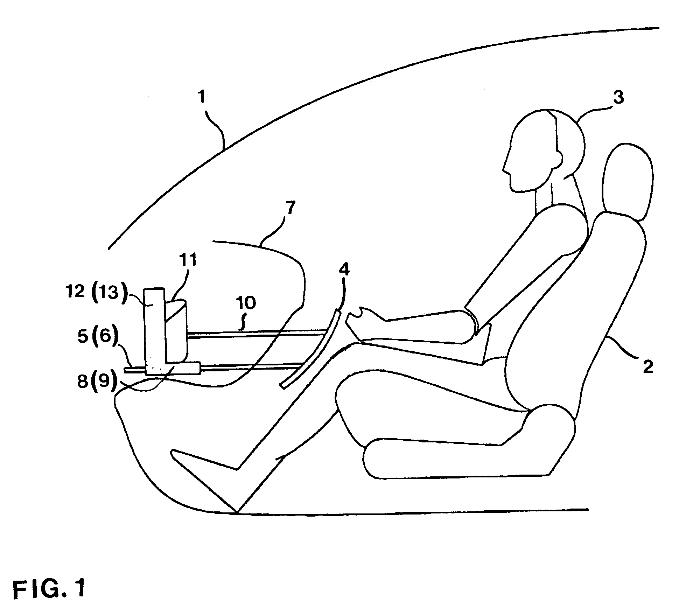

- Fig. 1: eine schematische Seitenansicht des beifahrerseitigen Abschnitts eines Personenwagens mit einer in Kniehöhe eines auf dem Beifahrersitz sitzenden Fahrgasts ausgefahrenen Polsterplatte,

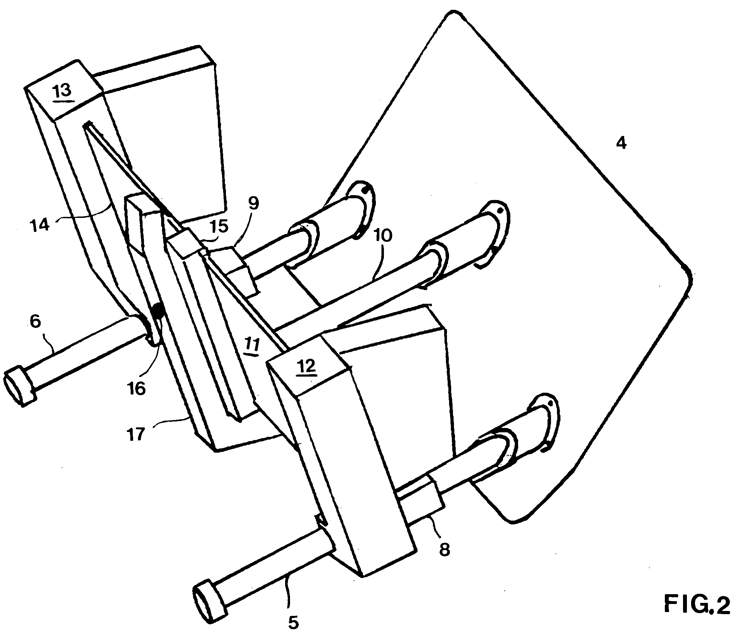

- Fig. 2: eine räumliche Darstellung der Sicherheitseinrichtung im Ruhezustand,

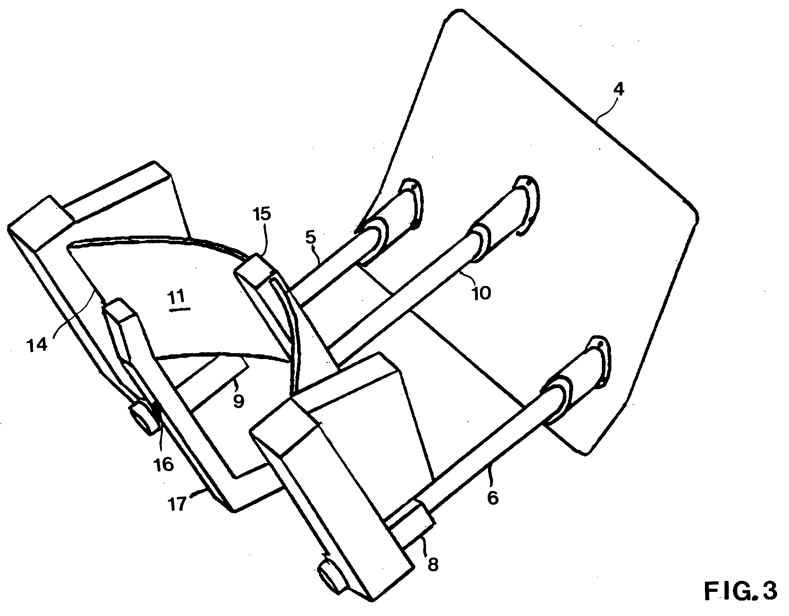

- Fig. 3: eine räumliche Darstellung der Sicherheitseinrichtung im aktivierten Zustand.

Ein umrißartig dargestellter vorderer Teil (1) der Fahrgastzelle eines Personenkraftwagens weist einen vorderen Beifahrersitz (2) mit einem auf diesem sitzenden Fahrgast (3) auf, der nicht mittels eines Sicherheitsgurtes angegurtet ist. Die Sicherheitseinrichtung besteht aus einer mit einer harten, plastisch verformbaren Kunststoffschicht beschichteten Polsterplatte (4), die auf ihrer Rückseite an zwei zylindrischen, in Fahrzeuglängsrichtung verschiebbaren Gleitführungen (5, 6) befestigt ist. Im Ruhezustand ist die Polsterplatte (4) in der Frontpartie (7) des Fahrzeugs integriert. Die Gleitführungen (5, 6) sind jeweils in einem fahrzeugfesten Führungsgehäuse (8, 9) gelagert. Ein auf den Gleitführungen (5, 6) befestigter Stoppring sorgt dafür, daß das Verschieben der Polsterplatte (4) aus dem Ruhezustand gegen die Fahrtrichtung des Personenkraftwagens bei Erreichen der knienahen Position des Fahrgasts (3) abgebremst wird. Die Rückseite der Polsterplatte (4) ist über eine Schubstange (10) mit einer gerade vorgespannten Rechteck-Blattfeder (11) in deren zentraler Mitte verbunden. Die Rechteck-Blattfeder (11) ist beidseitig in den mit den Führungsgehäusen (8, 9) verbundenen fahrzeugfesten Halterungen (12, 13) angebrachten Schlitzen (14) eingespannt. Die vorgespannte Rechteck-Blattfeder (11) ist im Ruhezustand durch eine an ihr befestigte Halterung (15) über eine Trennschraube (16) mit dem fahrzeugfesten Haltearm (17) verbunden. Die Trennschraube (16) enthält einen Festtreibstoffsatz, der über einen elektrischen Zünder, ausgelöst durch einen im Fahrzeug angeordneten Aufprallstoß-Sensor, gezündet wird und die Zerstörung der Trennschraube (16) erfolgt, so daß die Rechteck-Blattfeder (11) gegen die Fahrtrichtung des Fahrzeugs bewegt und innerhalb von Sekundenbruchteilen die Polsterplatte (4) in Richtung auf die Knie des Fahrgasts (3) bewegt wird. Nach dem Aufprallstoß dauert es ca. 12 ms, bis die Halterung (15) der Rechteck-Blattfeder (11) von dem Haltearm (17) getrennt und die Rechteck-Blattfeder (11) durch die Federkraft gegen die Fahrtrichtung des Fahrzeugs parabelförmig gebogen wird, wobei die Polsterplatte (4) in Richtung auf die Knie des Fahrgasts (3) hin in weiteren ca. 12 ms bewegt wird. Auf diese Weise ist das Verletzungsrisiko des Fahrgasts (3) im Fußraumbereich des Personenkraftwagens erheblich gemindert. Durch die Polsterplatte (4) nimmt der Fahrgast (3) so früh wie möglich an dem Verzögerungsverlauf des Personenkraftwagens teil, so daß Verletzungen der unteren Extremitäten erheblich reduziert werden.

## Patentansprüche

1. Sicherheitseinrichtung für die Fahrgastzelle einer Kraftfahrzeug-Karosserie, vorzugsweise Personenkraftwagen-Karosserie, bestehend aus einer in Kniehöhe vor dem auf einem Fahrzeugsitz (2), vorzugsweise Beifahrersitz, sitzenden Fahrgast (3) in der Frontpartie (7) der Fahrgastzelle eingebauten, an einer Führung (5, 6) befestigten Polsterplatte (4), die bei einem Aufprallstoß mittels eines Antriebs im wesentlichen in Richtung zu den Knien des Fahrgasts hin bewegbar ist, dadurch gekennzeichnet, daß der Antrieb aus einer fahrzeugfest eingespannten, im Ruhezustand vorgespannten, gegen die Fahrtrichtung des Fahrzeugs auslösbaren, mit der Polsterplatte (4) verbundenen Blattfeder (11) besteht.

2. Sicherheitseinrichtung nach Anspruch 1, dadurch gekennzeichnet, daß die Blattfeder (11) im vorgespannten Ruhezustand gerade, elliptisch oder parabelförmig geformt ist.

3. Sicherheitseinrichtung nach den Ansprüchen 1 und 2, dadurch gekennzeichnet, daß die Blattfeder (11) aus Federstahl oder mit Glasfasern oder Kohlestoffasern verstärktem Kunststoff besteht.

4. Sicherheitseinrichtung nach einem der Ansprüche 1 bis 3, gekennzeichnet durch eine einfache Blattfeder (11).

5. Sicherheitseinrichtung nach einem der Ansprüche 1 bis 3, gekennzeichnet durch eine geschichtete Blattfeder (11), vorzugsweise mit reibungsarmen Zwischenlagen.

6. Sicherheitseinrichtung nach einem der Ansprüche 1 bis 5, dadurch gekennzeichnet, daß die Blattfeder (11) beidseitig eingespannt und über eine in ihrem hochbeanspruchten Bereich angebrachte Schubstange (10) mit der Polsterplatte (4) verbunden ist.

7. Sicherheitseinrichtung nach einem der Ansprüche 1 bis 5, dadurch gekennzeichnet, daß die Blattfeder (11) mittig eingespannt ist und die an den Endabschnitten jeweils befestigte Führung (5, 6) der Polsterplatte (4) als Schubstange für das Verschieben der Polsterplatte dient.

8. Sicherheitseinrichtung nach einem der Ansprüche 1 bis 6, dadurch gekennzeichnet, daß die Blattfeder (11) einseitig eingespannt ist und die an dem freien Endabschnitt befestigte Führung der Polsterplatte (4) gleichzeitig als Schubstange für das Verschieben der Polsterplatte dient.

9. Sicherheitseinrichtung nach einem der Ansprüche 1 bis 8, dadurch gekennzeichnet, daß die Blattfeder (11) horizontal oder vertikal angeordnet ist.

10. Sicherheitseinrichtung nach einem der Ansprüche 1 bis 9, dadurch gekennzeichnet, daß die im Ruhezustand vorgespannte Blattfeder (11) mittels einer Trennschraube (16) mit einer fahrzeugfesten Halteeinrichtung (17) verspannt ist.

11. Sicherheitseinrichtung nach einem der Ansprüche 1 bis 9, dadurch gekennzeichnet, daß die im Ruhezustand vorgespannte Blattfeder (11) mittels eines fahrzeugfesten Elektromagneten gehalten ist.

12. Sicherheitseinrichtung nach einem der Ansprüche 1 bis 11, dadurch gekennzeichnet, daß als Blattfeder (11) eine Rechteckfeder, Dreieckfeder, Trapezfeder oder Halbelliptikfeder eingesetzt ist.

13. Sicherheitseinrichtung nach einem der Ansprüche 1 bis 12, dadurch gekennzeichnet, daß die Blattfeder (11) über eine Steckverbindung mit der Schubstange (10) bzw. Führung (5, 6) verbunden ist.

14. Sicherheitseinrichtung nach einem der Ansprüche 1 bis 13, dadurch gekennzeichnet, daß auf der Führung (5, 6) der Polsterplatte (4) ein Stoppring befestigt ist.

15. Sicherheitseinrichtung nach einem der Ansprüche 1 bis 14, dadurch gekennzeichnet, daß die Führung (5, 6) der Polsterplatte (4) horizontal oder schräg von unten vorn nach oben hinten verschiebbar gelagert ist.
